# EUROPEAN PATENT APPLICATION

(11) **EP 4 708 556 A1**
(43) Date of publication of application: **11.03.2026**
(21) Application number: 24911819.1
(22) Date of filing: 18.07.2024
(51) Int. Cl.: H01M 50/627

(54) **CELL CONTAINER, UPPER PLATE, CHECK VALVE, NOZZLE, BATTERY CELL, AND PRODUCTION METHOD THEREFOR**

(30) Priority: 25.12.2023 WO PCT/JP2023/046498
(71) Applicant: Pacific Industrial Co., Ltd., Ogaki-shi, Gifu 503-8603 (JP)
(72) Inventor: KANAMORI, Kazuhiro, Ogaki-shi, Gifu 503-8603 (JP)
(74) Representative: Kramer Barske Schmidtchen Patentanwälte PartG mbB
(86) International application number: PCT/JP2024/025737
(87) International publication number: WO 2025/141921

(57) **Abstract**

[Problem] A technique is disclosed that enables prevention of a problem in which an electrolytic solution leaks out from an injection hole.

[Solution] A cell container 11A of a battery cell 10A of the present embodiment includes: an injection hole 22 including a check valve mechanism 20A configured to allow injection of an electrolytic solution 91 into the cell container 11A and prevent outflow; and a valve-opening operation portion 27 provided in the check valve mechanism 20A and configured to bring the check valve mechanism 20A into an open state by applying an external force other than a fluid pressure.

## Description

### TECHNICAL FIELD

The present disclosure relates to a battery cell, a method for manufacturing the battery cell, a cell container of the battery cell, an upper plate and a check valve, which are part of the cell container, and a nozzle for injecting an electrolytic solution into the cell container of the battery cell.

### BACKGROUND ART

A cell container of a conventional battery cell has an injection hole for injecting an electrolytic solution in its upper portion, and the injection hole is closed after the injection of the electrolytic solution (see, for example, Patent Document 1).

### RELATED ART DOCUMENT

### PATENT DOCUMENT

Patent Document 1: JP 2013-219027 A (paragraphs [0019], [0039], FIG. 3)

### SUMMARY OF THE INVENTION

### PROBLEMS TO BE SOLVED BY THE INVENTION

In the conventional cell container described above, a problem may occur in which the cell container falls down before the injection hole is closed, and the electrolytic solution leaks out from the injection hole. Hence, the present application discloses a technique that enables prevention of the problem in which the electrolytic solution leaks out from the injection hole.

### MEANS OF SOLVING THE PROBLEMS

A cell container of one aspect of the present disclosure made to solve the above problem is a cell container of a battery cell, the cell container including: an injection hole configured to allow injection of an electrolytic solution into the cell container; a check valve mechanism configured to allow passage of the electrolytic solution into the cell container through the injection hole and to prevent passage of the electrolytic solution to an outside of the cell container through the injection hole; and a valve-opening operation portion provided in the check valve mechanism and configured to bring the check valve mechanism into an open state by applying an external force other than a fluid pressure.

### BRIEF DESCRIPTION OF THE DRAWINGS

[FIG.1] FIG. 1 is a perspective view of a battery cell according to a first embodiment.
[FIG.2] FIG. 2 is a cross-sectional side view of the battery cell.
[FIG.3] FIG. 3 is a perspective view of a laminate.
[FIG.4] FIG. 4 is a cross-sectional side view of a portion of an upper plate provided with a check valve mechanism.
[FIG.5] FIG. 5 is a cross-sectional side view of a nozzle and the check valve mechanism.
[FIG.6] FIG. 6 is a cross-sectional side view of a modification of the upper plate.
[FIG.7] FIG. 7 is a cross-sectional side view of the check valve mechanism in a closed state closed by a closing member.
[FIG.8] FIG. 8 is a cross-sectional side view of a check valve mechanism according to a second embodiment.
[FIG.9] FIG. 9 is a cross-sectional side view of a check valve mechanism according to a third embodiment.
[FIG.10] FIG. 10 is a cross-sectional side view of a check valve mechanism according to a fourth embodiment.
[FIG.11] FIG. 11 is a cross-sectional side view of a nozzle and a check valve mechanism according to a fifth embodiment.
[FIG.12] FIG. 12 is a cross-sectional side view of the check valve mechanism brought into an open state by the nozzle.
[FIG.13] FIG. 13 is a cross-sectional side view of a nozzle and a check valve mechanism according to a sixth embodiment.
[FIG.14] FIG. 14 is a cross-sectional side view of a nozzle and a check valve mechanism according to a seventh embodiment.
[FIG.15] FIG. 15 is a cross-sectional side view of a battery cell according to an eighth embodiment.
[FIG.16] FIG. 16 is a cross-sectional side view of a check valve mechanism according to a ninth embodiment.
[FIG.17] FIG. 17 is a cross-sectional side view of a nozzle and the check valve mechanism.

### MODE FOR CARRYING OUT THE INVENTION

### [First embodiment]

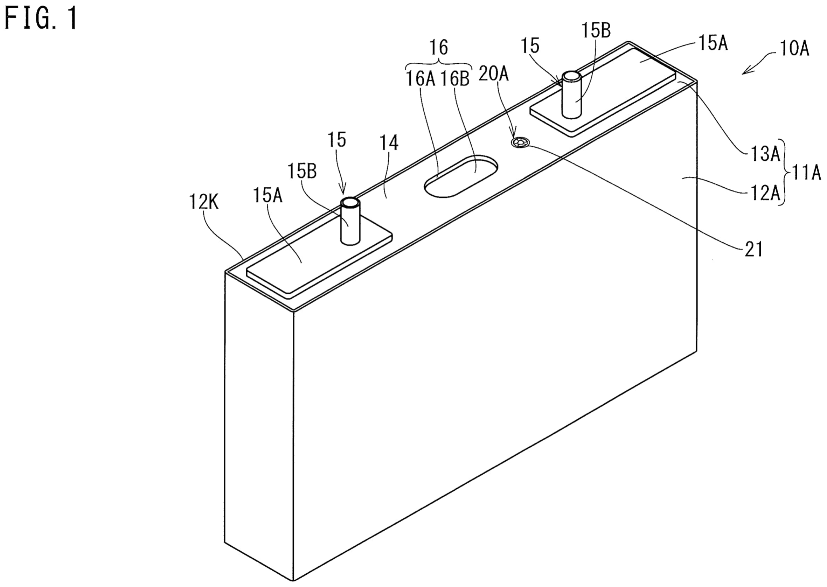

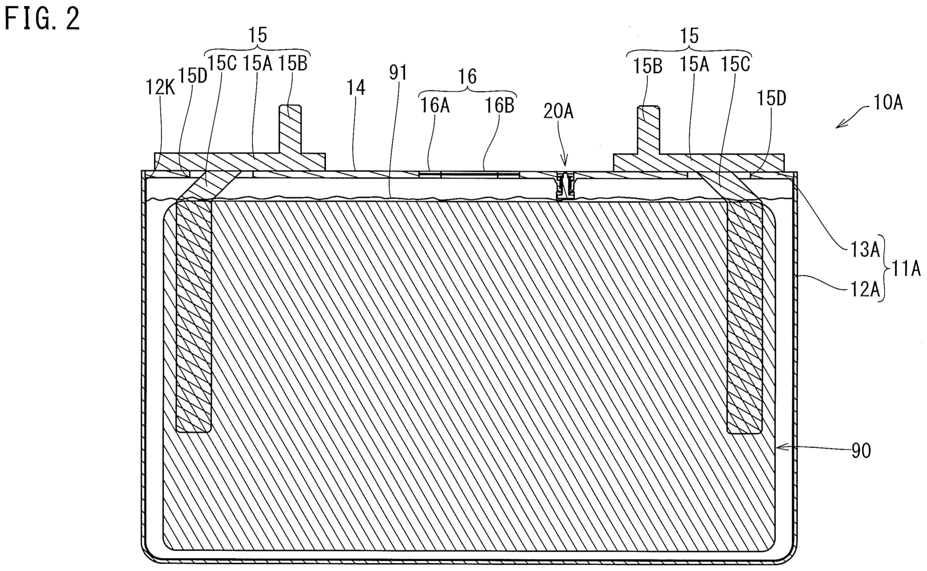

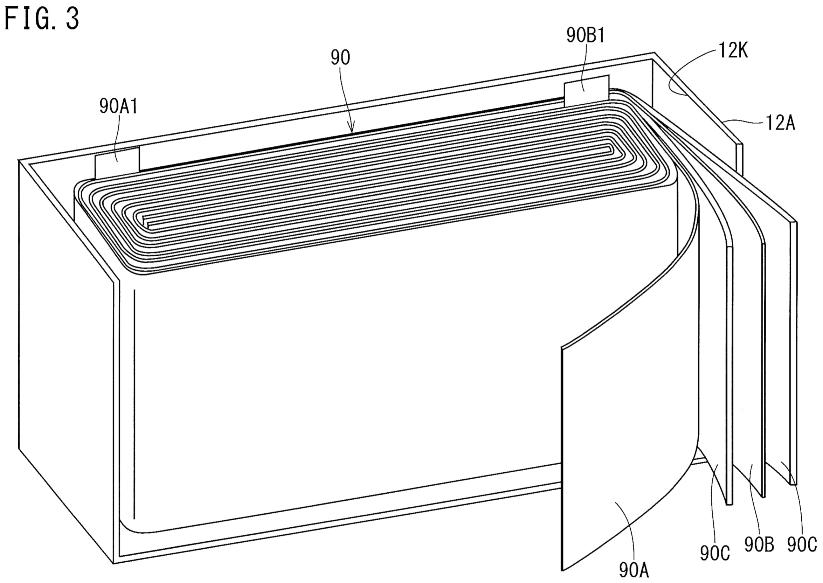

A battery cell 10A according to a first embodiment of the present disclosure will be described with reference to FIGS. 1 to 7. The battery cell 10A of the present embodiment illustrated as a whole in FIG. 1 is, for example, a lithium ion secondary battery, and includes a laminate 90 having a typical structure in which a positive electrode sheet 90A, a negative electrode sheet 90B, and a separator sheet 90C are laminated and wound as illustrated in FIG. 3, and a cell container 11A that accommodates the laminate 90 and an electrolytic solution 91 as illustrated in FIG. 2. One of the features of the battery cell 10A is a check valve mechanism 20A provided in the cell container 11A.

The battery cell 10A of the present embodiment is a lithium-ion secondary battery, but may be any secondary battery that is provided with the check valve mechanism in the cell container.

As illustrated in FIG. 1, the cell container 11A has, for example, a rectangular parallelepiped shape that is flat in a lateral direction. In the cell container 11A, a rectangular parallelepiped container body 12A having an open upper surface and an upper plate 13A that closes an upper surface opening 12K of the container body 12A are separately manufactured. The upper plate 13A is formed by attaching a plurality of components such as a pair of electrodes 15 and the check valve mechanism 20A to a rectangular plate body 14 corresponding to the upper surface opening 12K of the container body 12A. The plate body 14 and the container body 12A are both made of metal, for example, and are welded or brazed together to fix the upper plate 13A to the container body 12A.

The shape of the cell container 11A of the present embodiment is a flat rectangular parallelepiped, but is not limited thereto, and may be, for example, a non-flat rectangular parallelepiped shape, a columnar shape, an elliptical columnar shape, or other shapes. The container body 12A and the plate body 14 are made of metal (for example, aluminum, aluminum alloy, stainless steel, iron alloy, or the like), but may be made of any member such as resin or ceramics. In a case where the container body 12A and the plate body 14 are both made of metal, they are preferably made of the same metal or metals having substantially the same ionization tendency. In the cell container 11A of the present embodiment, the container body 12A and the upper plate 13A are separately manufactured. However, for example, the cell container 11A may have a structure in which one side of the plate body 14 is continuous with one opening edge of the container body 12A, and the container body 12A and the upper plate 13A are integrally manufactured. In a case where the container body 12A and the upper plate 13A are separately manufactured, fixing of them is not limited to welding or brazing, and for example, they may have a structure in which they are fixed by swaging, an adhesive, screwing, or the like. Moreover, "fixing" in the following description may be any of welding, brazing, swaging, an adhesive, screwing, or the like.

As illustrated in FIG. 2, each of the above-described pair of electrodes 15 includes, for example, a rectangular support plate 15A, a support column 15B standing upward from the support plate 15A, and a connection portion 15C protruding downward from the support plate 15A. The support plates 15A of the pair of electrodes 15 are respectively fixed to both end portions of the plate body 14 in a longitudinal direction, with an insulating material (not illustrated) interposed therebetween to close a pair of through holes 15D from above. The connection portion 15C of each of the electrodes 15 protrudes downward from the plate body 14, a connection piece 90A1 (see FIG. 3) protruding from the positive electrode sheet 90A is fixed to the connection portion 15C of one of the electrodes 15, and a connection piece 90B1 (see FIG. 3) protruding from the negative electrode sheet 90B is fixed to the connection portion 15C of the other electrode 15.

As illustrated in FIG. 1, for example, a relief valve mechanism 16 is provided at the center of the upper plate 13A. The relief valve mechanism 16 has a structure in which an opening port 16A formed in the plate body 14 is closed by a rupture sheet 16B laid and fixed on a lower surface of the plate body 14. The rupture sheet 16B is of such strength as to rupture when the pressure inside the cell container 11A exceeds a predetermined limit pressure.

The relief valve mechanism 16 of the present embodiment is configured to rupture the rupture sheet 16B in order to release the pressure. However, the relief valve mechanism 16 may have a structure, for example, including a valve body supported so as to be linearly movable or rotatable and capable of closing the opening port 16A from the outside, and a spring member that biases the valve body in a closing direction, in which the valve body opens against a biasing force of the spring member to release the pressure when the pressure inside the cell container 11A exceeds the predetermined limit pressure. A relief valve may be manufactured as a separate unit from the plate body 14, and the relief valve may be attached to the plate body 14 to form the relief valve mechanism 16. The cell container 11A of the present embodiment is provided with the relief valve mechanism 16, but may not be provided with the relief valve mechanism 16.

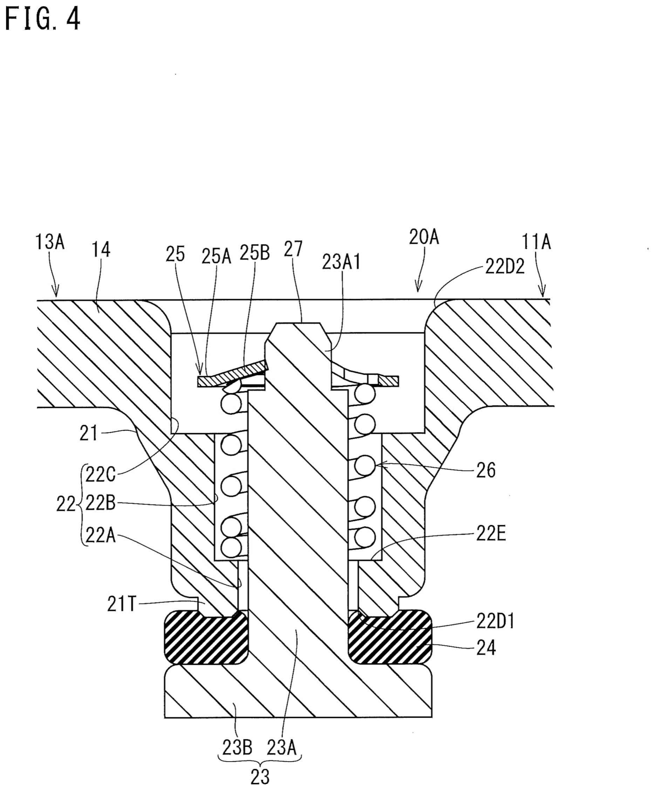

As illustrated in FIG. 1, the check valve mechanism 20A is disposed, for example, between the relief valve mechanism 16 and one of the electrodes 15 on the upper plate 13A. As illustrated in FIG. 4, the check valve mechanism 20A includes a support cylindrical portion 21 included in the plate body 14, a movable body 23 linearly movably supported by the support cylindrical portion 21, and a spring member 26 that biases the movable body 23 toward one side in a linear motion direction.

The support cylindrical portion 21 is, for example, a cylindrical body formed integrally with the plate body 14 and protruding downward from the plate body 14, and the interior thereof serves as an injection hole 22 that vertically passes through the plate body 14. An annular protrusion 21T is formed on a distal end surface of the support cylindrical portion 21 such that its inner edge portion (that is, an opening edge of the injection hole 22) protrudes along the entire edge. The injection hole 22 increases stepwise in diameter toward the upper side, and includes a small-diameter portion 22A, a medium-diameter portion 22B, and a large-diameter portion 22C sequentially from its lower end toward the upper side. A tapered chamfered surface 22D1 is formed at a corner where an inner surface of the injection hole 22 and a distal end surface of the annular protrusion 21T intersect with each other, and an arc-shaped chamfered surface 22D2 is formed at a corner where the inner surface of the injection hole 22 and an upper surface of the plate body 14 intersect with each other.

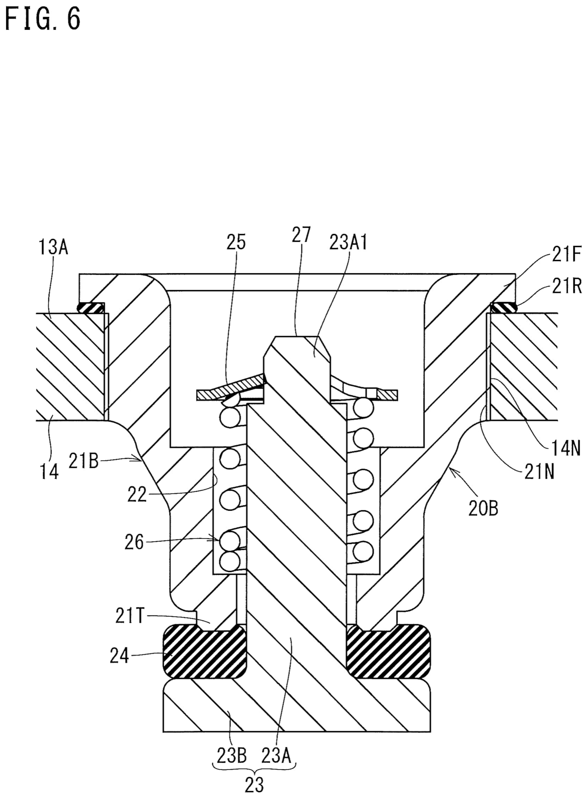

In the present embodiment, the support cylindrical portion 21 protrudes only toward the lower side of the plate body 14, but may protrude only toward the upper side of the plate body 14, or may protrude both toward the upper and lower sides. The support cylindrical portion 21 of the present embodiment has a circular cross section, but may have an elliptical or long-circle cross section. Although the support cylindrical portion 21 of the present embodiment is formed integrally with the plate body 14, a support cylindrical portion 21B may be provided separately from the plate body 14, and may be fixed to the plate body 14 as illustrated in FIG. 6. In this case, a check valve mechanism 20B including the support cylindrical portion 21B and formed as a separate unit from the plate body 14 is also a "check valve" as a single component. The check valve in FIG. 6 includes, for example, a flange 21F at an upper end portion of the support cylindrical portion 21B, and a threaded portion 21N at an upper portion of an outer circumferential surface of the support cylindrical portion 21B. The check valve is fixed to the plate body 14 in a state where the threaded portion 21N is screwed into a threaded hole 14N formed in the plate body 14 and an O-ring 21R is sandwiched between the plate body 14 and the flange 21F. As described above, the fixing may be performed by any method such as welding or swaging.

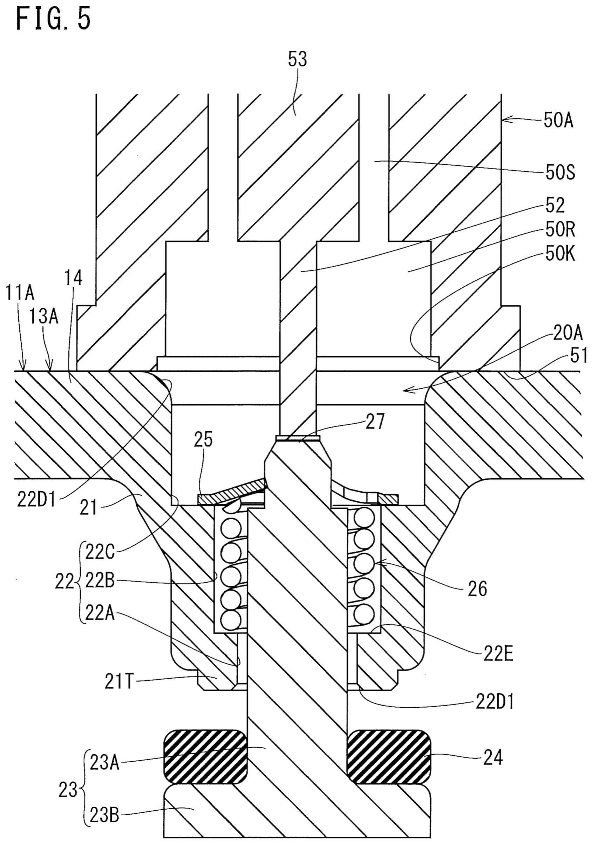

As illustrated in FIG. 4, the movable body 23 has a structure in which a flange portion 23B protrudes from a lower end portion of a shaft portion 23A that is loosely fitted in the small-diameter portion 22A of the injection hole 22. For example, a disk-shaped packing 24 is laid on an upper surface of the flange portion 23B as a seal member. The shaft portion 23A is inserted into the injection hole 22 from below, and the packing 24 is disposed to face the distal end surface (specifically, the annular protrusion 21T) of the support cylindrical portion 21. The outer diameter of the shaft portion 23A is smaller than the inner diameter of the small-diameter portion 22A of the support cylindrical portion 21, and a gap is provided between an outer surface of the shaft portion 23A and an inner surface of the support cylindrical portion 21. When the movable body 23 is located at an open position where the packing 24 is separated from the annular protrusion 21T, the check valve mechanism 20A shifts into an open state to open the injection hole 22, and liquid and gas can pass through the injection hole 22 (see FIG. 5). When the movable body 23 is located at a closed position where the packing 24 is in contact with the annular protrusion 21T, the check valve mechanism 20A shifts into a closed state to close the injection hole 22, and liquid and gas are prevented from passing through the injection hole 22.

The movable body 23 of the present embodiment may have any structure in which the flange portion 23B protrudes from the shaft portion 23A. For example, the flange portion 23B may be disposed at an intermediate position in an axial direction of the shaft portion 23A, the flange portion 23B may have a disk structure having a center hole, into which the shaft portion 23A may be press-fitted, or the flange portion 23B and the shaft portion 23A may be integrally formed. In addition, although the packing 24 is exemplified as the seal member, the seal member is not limited to the packing, and may be an O-ring.

An upper end portion of the shaft portion 23A is a small-diameter distal end portion 23A1 that decreases stepwise in diameter with respect to the entire shaft portion 23A. A locking ring 25 is fixed at an intermediate position in the axial direction of the small-diameter distal end portion 23A1. The locking ring 25 is, for example, a general-purpose component usually called a "clip ring", a "lock washer", a "flower washer", or the like. The locking ring 25 has a structure in which a plurality of protrusion pieces 25B protrude inward from an annular portion 25A, and is press-fitted to the small-diameter distal end portion 23A1 and locked at the intermediate position in the axial direction of the small-diameter distal end portion 23A1. The locking ring 25 has an outer diameter larger than the inner diameter of the medium-diameter portion 22B and smaller than the inner diameter of the large-diameter portion 22C, and moves up and down in the large-diameter portion 22C along with the linear movement of the movable body 23. In a state where the movable body 23 is disposed at the closed position, an upper end surface of the shaft portion 23A is located slightly below the upper surface (outer surface) of the plate body 14 such that the shaft portion 23A does not protrude outward beyond the injection hole 22.

The spring member 26 is, for example, a compression coil spring, and is attached in a resiliently compressed state between a step surface 22E that is formed between the small-diameter portion 22A and the medium-diameter portion 22B in the injection hole 22, and the locking ring 25 so as to bias the movable body 23 toward the closed position. As a result, in a normal state where no force is applied to the movable body 23 from the outside of the cell container 11A, the check valve mechanism 20A is in a closed state. When a force large enough to resist a biasing force of the spring member 26 is applied from the outside of the cell container 11A of the movable body 23, the check valve mechanism 20A shifts into an open state. The upper end portion of the shaft portion 23A serves as a valve-opening operation portion 27 for applying a force other than a fluid pressure to the movable body 23 from the outside of the cell container 11A.

In the present embodiment, the spring member 26 is prevented from coming off by the locking ring 25. However, any structure may be adopted that can hold the spring member 26 in a resiliently compressed state. For example, a structure may be adopted in which a washer is fixed to the shaft portion 23A by press-fitting, swaging, or screwing instead of the locking ring 25. In addition, instead of the structure with the washer provided separately from the shaft portion 23A, a structure with a washer formed integrally with the shaft portion 23A may be adopted. In a case where the washer that prevents the spring member 26 from coming off is formed integrally with the shaft portion 23A, the spring member 26 can be easily attached to the shaft portion 23A by adopting a barrel-shaped or conical coil spring as the spring member 26.

Among the components such as the support cylindrical portion 21, the movable body 23, the packing 24, the locking ring 25, and the spring member 26 described above included in the check valve mechanism 20A, all the components other than the packing 24 are made of metal. Examples thereof include aluminum, aluminum alloy, stainless steel, and iron alloy. Here, in a case where components that contact each other, among the components other than the packing 24, are both made of metal, it is preferable that such components are both made of the same metal, or metals having substantially the same ionization tendency, or the electrical conductivity of at least one of such components at 20°C is 1.74 × 10⁶ S/m or less or 3%IACS or less. In the present embodiment, all the components other than the packing 24 are made of stainless steel. In addition, the packing 24E only needs to have elasticity, and is made of, for example, an elastomer (including rubber and a thermoplastic elastomer), a soft resin, or the like.

In a case where the components that contact each other among the components other than the packing 24 are made of dissimilar metals, at least one of such two metal components may be coated with an insulating material such as resin in order to prevent corrosion due to contact of the dissimilar metals. In addition, the components other than the packing 24 may be made of a member other than metal, such as resin or ceramics, instead of metal. In a case where the components other than the packing 24 are made of resin, ceramics, or the like, all the components forming the check valve mechanism 20A are made of a non-conductor.

The structure of the battery cell 10A of the present embodiment has been described above. FIG. 5 illustrates a nozzle 50A used for manufacturing the battery cell 10A. The nozzle 50A is for injecting the electrolytic solution 91 (see FIG. 2) into the cell container 11A, and is connected to a tank that stores the electrolytic solution 91 through a hose and a pump (not illustrated).

An opening edge contact portion 51 that is an annular flat surface is provided at a distal end of the nozzle 50A, and the inside of the opening edge contact portion 51 serves as a distal end opening 50K that is a discharge port of a flow path 50R in the nozzle 50A. The diameter of the distal end opening 50K is substantially the same as the diameter of the injection hole 22 of the battery cell 10A on an outer surface of the battery cell 10A. The flow path 50R extends from the distal end of the nozzle 50A to a position close to the distal end with substantially the same inner diameter as that of the distal end opening 50K, and a partition wall 53 facing the distal end opening 50K from the inside of the nozzle 50A is provided at the position close to the distal end in the nozzle 50A. A plurality of small flow paths 50S included in the flow path 50R pass around a center portion of the partition wall 53.

The nozzle 50A includes a rod-shaped valve opener portion 52 extending from a center portion of a surface of the partition wall 53 that faces the distal end opening 50K, to a position beyond the opening edge contact portion 51. In a state where the opening edge contact portion 51 is in contact with the opening edge of the injection hole 22 on the outer surface of the battery cell 10A, the valve opener portion 52 presses the valve-opening operation portion 27 of the check valve mechanism 20A so as to hold the check valve mechanism 20A in an open state.

Next, a method for manufacturing the battery cell 10A of the present embodiment will be described. In order to manufacture the battery cell 10A, for example, the container body 12A, the upper plate 13A, and the laminate 90 are prepared in a separated state. Then, in an assembling step, assembling is performed such that the laminate 90 is accommodated in the container body 12A with the connection pieces 90A1 and 90B1 of the laminate 90 connected to the connection portions 15C of the pair of electrodes 15 of the upper plate 13A, and the upper plate 13A closes the upper surface opening 12K of the container body 12A. Then, the plate body 14 of the upper plate 13A is welded or brazed to an opening edge of the upper surface opening 12K of the container body 12A. In this manner, the assembling step is completed.

Next, an electrolytic solution injection step is performed. As a preparation therefor, a plurality of the battery cells 10A for which the assembling step has been completed are fixed and positioned, for example, on jigs of a carriage (not illustrated). Then, the carriage is disposed and positioned, for example, in front of an electrolytic solution injection robot (not illustrated) that holds the nozzle 50A described above. Then, for example, a program taught in advance to the electrolytic solution injection robot is executed, and the nozzle 50A is sequentially connected to the injection holes 22 of the plurality of battery cells 10A, and the electrolytic solution 91 is injected in a predetermined amount into each battery cell 10A (see FIG. 5).

Here, since it takes time for the electrolytic solution 91 to permeate among the positive electrode sheet 90A, the negative electrode sheet 90B, and the separator sheet 90C in each battery cell 10A, a cycle operation of sequentially injecting the electrolytic solution 91 into the plurality of battery cells 10A is repeated for a plurality of cycles, and the electrolytic solution 91 is injected into each battery cell 10A in multiple steps. The nozzle 50A is connected to the injection hole 22 of each battery cell 10A by pressing the opening edge contact portion 51 of the nozzle 50A against the opening edge of the injection hole 22 on the outer surface of the battery cell 10A. At this time, the valve opener portion 52 of the nozzle 50A pushes the valve-opening operation portion 27 of the check valve mechanism 20A to hold the check valve mechanism 20A in an open state, so that fluid resistance by the check valve mechanism 20A is suppressed, and smooth injection of the electrolytic solution 91 is enabled. In an injection method in which the check valve mechanism 20A is opened by the fluid pressure of the electrolytic solution 91 without pushing the valve-opening operation portion 27, a so-called hunting phenomenon may occur in which the check valve mechanism 20A repeats an opening and closing operation. However, according to the injection method of the present embodiment, the occurrence of the hunting phenomenon is prevented.

The injection hole 22 of the battery cell 10A waiting for the next injection after the electrolytic solution 91 has been injected is closed by the check valve mechanism 20A when the nozzle 50A is detached. Thus, contact between the electrolytic solution 91 in the cell container 11A and the outside air is avoided. This eliminates the need for strict management of the air in a factory where the electrolytic solution injection step is performed. Furthermore, even if the battery cell 10A falls down due to an unexpected collision, it is possible to prevent a problem in which the electrolytic solution 91 leaks out from the injection hole 22 of the battery cell 10A because the injection hole 22 is closed by the check valve mechanism 20A.

When the electrolytic solution injection step is completed, an initial charging step is performed. To this end, the above-described carriage is moved to, for example, a charging device (not illustrated). Then, for example, a plurality of pairs of charging electrodes provided in the charging device are connected to the pairs of electrodes 15 of the plurality of battery cells 10A on the carriage to apply a voltage between the pair of electrodes 15 of each battery cell 10A for a predetermined period of time.

When the initial charging step is completed, a gas discharging step is performed. To this end, the above-described carriage is disposed and positioned in front of a discharging robot (not illustrated). A tool (not illustrated) provided with a plurality of pins that are laterally aligned is attached to a distal end of the gas discharging robot. For example, when a program taught in advance to the gas discharging robot is executed, the gas discharging robot performs a degassing process in which the plurality of pins are pressed against the valve-opening operation portions 27 of the check valve mechanisms 20A of the plurality of battery cells 10A and then immediately separated therefrom. As a result, the check valve mechanisms 20A of the plurality of battery cells 10A are momentarily brought into an open state, a gas generated in the battery cells 11A in the initial charging step is released, and the pressure in the battery cells 11A becomes close to the atmospheric pressure. In this manner, the gas discharging step is completed, and the manufacture of the battery cell 10A is completed.

According to the battery cell 10A and the method for manufacturing the battery cell 10A of the present embodiment, the following operational effects are obtained. That is, since the check valve mechanism 20A is provided in the injection hole 22 in the cell container 11A of the battery cell 10A of the present embodiment, it is possible to prevent the problem in which the electrolytic solution 91 leaks out from the injection hole 22. In addition, since the injection hole 22 of the battery cell 10A on standby after the injection of the electrolytic solution 91 is closed by the check valve mechanism 20A, contact between the electrolytic solution 91 in the cell container 11A and the outside air is avoided. This eliminates the need for strict management of the air in a factory where the electrolytic solution injection step is performed.

In addition, since the container body 12A and the upper plate 13A including the check valve mechanism 20A are separately manufactured to form the cell container 11A, the attaching operation of the check valve mechanism 20A can be easily performed, and the production efficiency is improved.

In the method for manufacturing the battery cell 10A of the present embodiment, the nozzle 50A including the valve opener portion 52 is used at the time of injection of the electrolytic solution 91 into the battery cell 10A, and the valve opener portion 52 presses the valve-opening operation portion 27 of the check valve mechanism 20A to hold the check valve mechanism 20A in an open state. Therefore, fluid resistance at the time of injection of the electrolytic solution 91 is suppressed, smooth injection is enabled, and the hunting phenomenon in which the check valve mechanism 20A is repeatedly opened and closed is prevented.

In the method for manufacturing the battery cell 10A of the present embodiment, the gas discharging step of discharging the gas generated in the battery cell 10A in the initial charging step is performed after the initial charging step, so that the following problem is solved. That is, in a conventional method for manufacturing a battery cell, initial charging is performed after the electrolytic solution has been injected into the cell container and the injection hole has been sealed. Thus, a problem occurs in which the inside of the cell container is brought into a pressurized state before use of the cell battery due to the gas generated by the initial charging, and deformation or deterioration of the cell container tends to accelerate. On the other hand, since the battery cell 10A of the present embodiment includes the check valve mechanism 20A, it is possible to perform the gas discharging step of discharging the gas in the battery cell 10A after the initial charging, and the above-described problem is solved by performing the gas discharging step.

Since the check valve mechanism 20A is provided in the battery cell 10A, it is possible to realize, for example, a manufacturing method in which the electrolytic solution 91 is injected into the cell container 11A in the electrolytic solution injection step described above, and then a compressed gas is injected into the cell container 11A to bring the inside of the battery cell 10A into a pressurized state. This increases the penetration rate of the electrolytic solution 91 among the positive electrode sheet 90A, the negative electrode sheet 90B, and the separator sheet 90C, and improves the production efficiency.

Furthermore, since the check valve mechanism 20A of the battery cell 10A is provided with the valve-opening operation portion 27 for applying an external force other than the fluid pressure to bring the check valve mechanism 20A into an open state, it is also possible to intentionally discharge the electrolytic solution 91 or the gas in the cell container 11A to the outside, and the degree of freedom in the method for manufacturing the battery cell 10A is increased.

In the manufacturing method of the present embodiment, the check valve mechanism 20A is brought into an open state by pressing the valve-opening operation portion 27 by the valve opener portion 52 of the nozzle 50A at the time of injection of the electrolytic solution 91. Alternatively, a nozzle not including the valve opener portion 52 may be used to bring the check valve mechanism 20A into an open state only by the fluid pressure of the electrolytic solution 91 at the time of injection without pressing the valve-opening operation portion 27. In addition, although the injection of the electrolytic solution 91 into the battery cell 10A and the discharge of the gas from the battery cell 10A are performed by the robots, an operator may perform these operations.

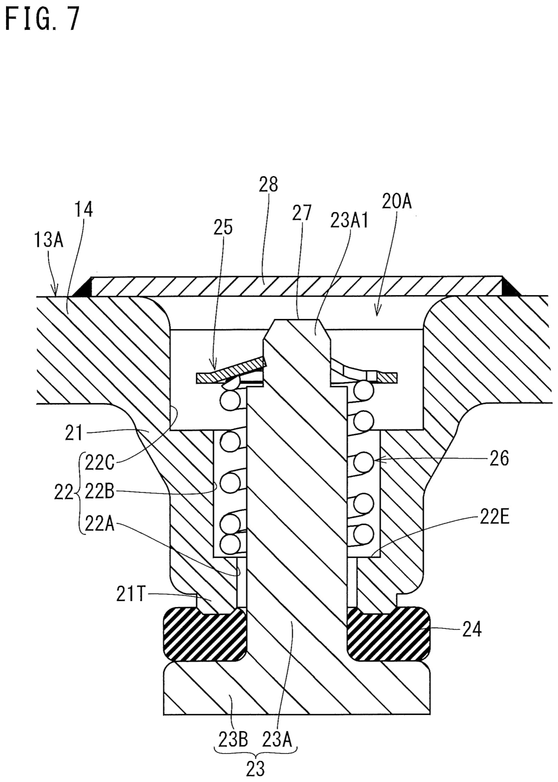

When the gas discharging step described above is completed, in order to reliably prevent entry of foreign matter such as water from the injection hole 22 into the battery cell 10A, a closing member 28 may be laid and fixed on the outer surface of the plate body 14 to close the injection hole 22 as illustrated in FIG. 7, or a cap type closing member (not illustrated) may be fitted or screwed into the injection hole 22 to close the injection hole 22. In second to fourth and ninth embodiments described below, the injection hole 22 may be similarly closed by the closing member 28.

In a case where the closing member 28 is configured to be detachable from the injection hole 22 or is not provided, the check valve mechanism 20A is brought into an open state and the battery cell 10A is filled with an activator, for example, in the event of deterioration of the electrolytic solution 91 of the battery cell 10A. Thus, the battery cell 10A can be easily recycled. The same applies to the second to ninth embodiments described below.

### [Second embodiment]

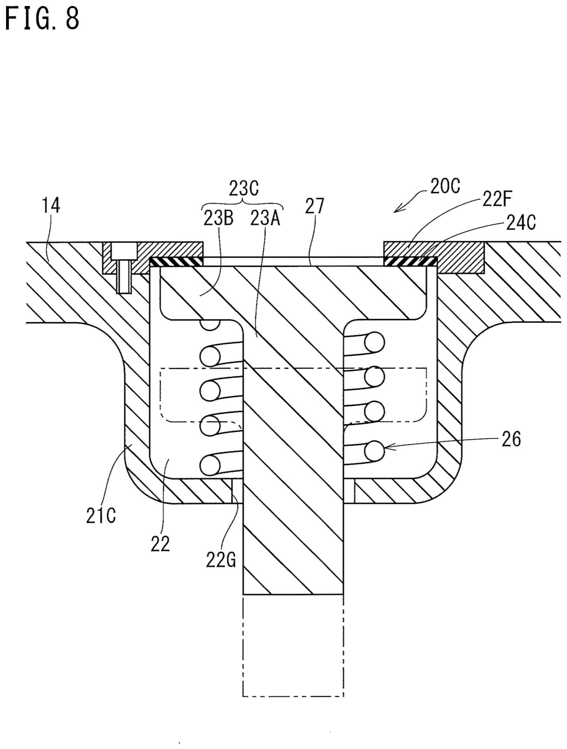

The present embodiment illustrated in FIG. 8 is different from the first embodiment only in the structure of a check valve mechanism 20C. The check valve mechanism 20C includes a support cylindrical portion 21C protruding downward from the plate body 14, a movable body 23C linearly movably supported by the support cylindrical portion 21, and a spring member 26 that biases the movable body 23C to one side in a linear motion direction. The support cylindrical portion 21C has, for example, a shape including a bottom wall at a lower end of a cylindrical body that protrudes downward from the plate body 14, and a through hole 22G at a center portion of the bottom wall. The interior of the support cylindrical portion 21C and the through hole 22G of the bottom wall of the support cylindrical portion 21C form the injection hole 22 passing through the plate body 14. A disk wall 22F protrudes inward from an upper opening edge of the injection hole 22, and a packing 24C is laid on and fixed to a lower surface of the disk wall 22F.

The movable body 23C has a shape in which a shaft portion 23A extends downward from the center of a lower surface of a flange portion 23B. The outer diameter of the flange portion 23B is larger than the opening diameter on the inner side of the disk wall 22F and smaller than the inner diameter of the support cylindrical portion 21C. The outer diameter of the shaft portion 23A is smaller than the inner diameter of the through hole 22G. The shaft portion 23A passes through the through hole 22G, and the flange portion 23B is accommodated in the support cylindrical portion 21C. A central portion of an upper surface of the flange portion 23B serves as the valve-opening operation portion 27.

The check valve mechanism 20C of the present embodiment also achieves the same operational effects as those of the first embodiment. The shaft portion 23A may be eliminated from the movable body 23C described above.

### [Third embodiment]

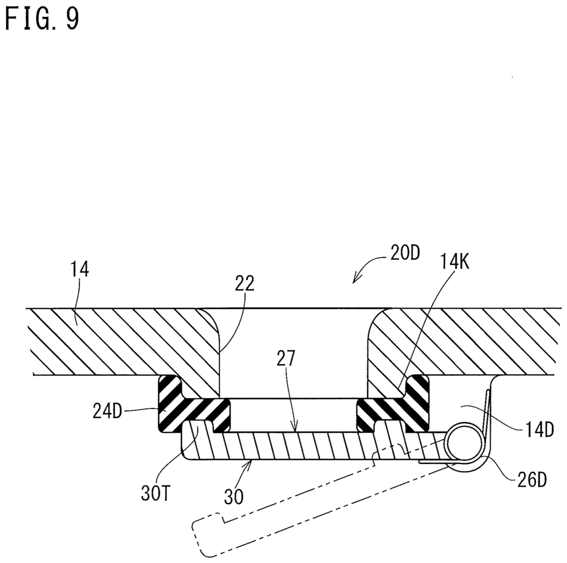

The present embodiment illustrated in FIG. 9 is different from the first and second embodiments only in the structure of a check valve mechanism 20D, and a movable body 30 is rotatably supported. Specifically, the check valve mechanism 20D of the present embodiment includes an annular protrusion 14K protruding from the opening edge of the injection hole 22 on the lower surface of the plate body 14, a packing 24D fixed in a state of covering the annular protrusion 14K from below, a rotation support portion 14D protruding downward from the vicinity of the annular protrusion 14K of the plate body 14, the movable body 30 rotatably supported at a lower end portion of the rotation support portion 14D and disposed to face the packing 24D, and a spring member 26D that is a torsion coil spring biasing the movable body 30 so as to be pressed against the packing 24D. The movable body 30 having a circular shape corresponding to the opening on the lower end of the injection hole 22, has an annular projection 30T to bite into the packing 24D. A central portion of an upper surface of the movable body 30 serves as the valve-opening operation portion 27. The check valve mechanism 20D of the present embodiment also achieves the same operational effects as those of the first embodiment.

### [Fourth embodiment]

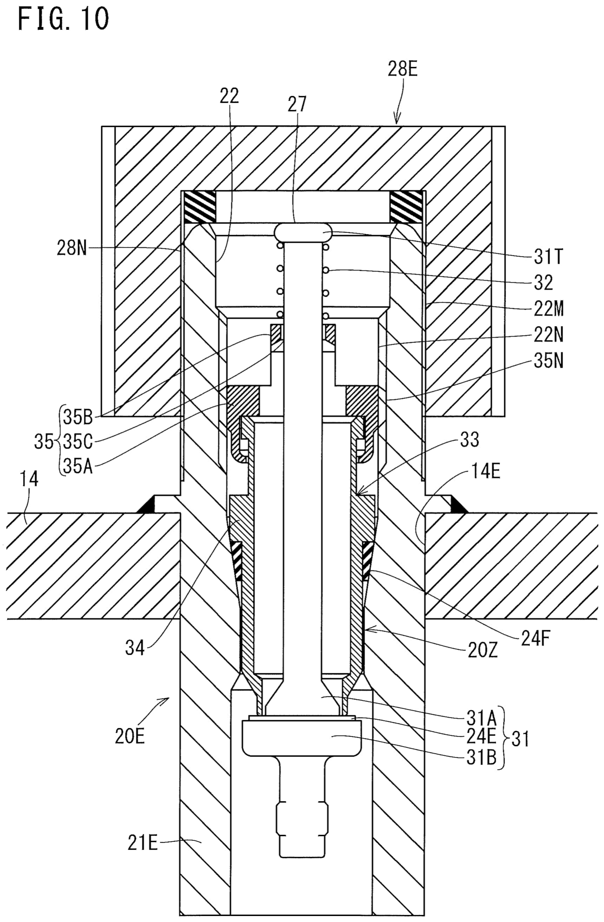

The present embodiment illustrated in FIG. 10 is different from the first to third embodiments only in the structure of a check valve mechanism 20E. The check valve mechanism 20E has a structure including a check valve 20Z that is widely used as a "valve core" of a tire valve, for example.

Specifically, the check valve mechanism 20E includes, for example, a valve sleeve 21E fixed in a state of passing through a through hole 14E of the plate body 14 and protruding upward and downward from the plate body 14, and the interior of the valve sleeve 21E serves as the injection hole 22. The injection hole 22 is narrowest at a position near its lower end, and gradually decreases in diameter from its upper end toward the position near its lower end. Threaded portions 22N and 22M are formed in an upper portion of an inner surface and an upper portion of an outer surface in the injection hole 22.

The check valve 20Z includes a valve stem 33, a movable body 31, a spring member 32, a sealing ring 24F, and the like. In the valve stem 33, a head portion 35 is rotatably connected to an upper end portion of a cylindrical stem body 34 extending in a vertical direction. The outer diameter of the stem body 34 decreases stepwise toward the lower side, and the sealing ring 24F described above is fitted to an intermediate position in the vertical direction on an outer circumferential surface of the stem body 34. The head portion 35 has a structure in which a bridge portion 35B is bridged across an upper surface of a ring portion 35A that is concentric with the stem body 34, and a through hole 35C vertically passes through a center portion of the bridge portion 35B. A threaded portion 35N is formed on an outer circumferential surface of the ring portion 35A.

The movable body 31 has a structure in which a flange portion 31B is fixed to a lower end portion of a shaft portion 31A extending in the vertical direction, and a packing 24E is held on the flange portion 31B. The shaft portion 31A is inserted into the valve stem 33 from below and also passes through the through hole 35C. In a state where the spring member 32, which is a compression coil spring, is fitted over a portion of the shaft portion 31A protruding upward from the head portion 35 and is compressed and deformed, a swaged protrusion 31T is formed at an upper end portion of the shaft portion 31A. The spring member 32 is in a resiliently compressed state between the swaged protrusion 31T and the head portion 35. As a result, the packing 24E is pressed against a lower end opening of the valve stem 33 by a resilient force of the spring member 32. When the valve-opening operation portion 27 at the upper end of the shaft portion 31A is pushed, the packing 24E is separated from the lower end opening of the valve stem 33 and fluid can pass through the valve stem 33.

The check valve 20Z is inserted into the injection hole 22 from above, and is fixed in the injection hole 22 by screwing the threaded portion 35N into the threaded portion 22N. A closing member 28E is detachably attached to an upper portion of the valve sleeve 21E. Specifically, the closing member 28E has a cylindrical shape having a closed upper end, and includes a threaded portion 28N on its inner surface. The closing member 28E is fixed to the valve sleeve 21E by screwing the threaded portion 22M of the valve sleeve 21E into the threaded portion 28N of the closing member 28E.

### [Fifth embodiment]

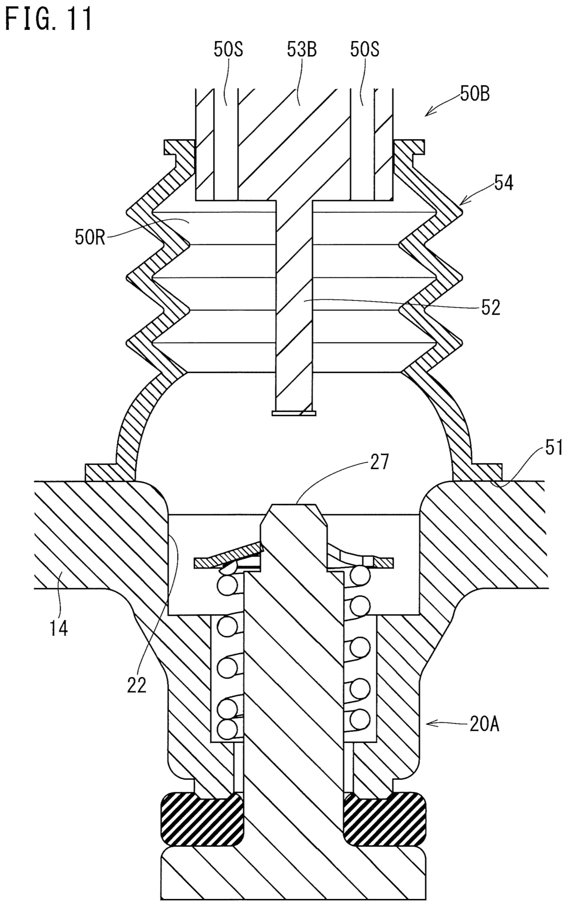

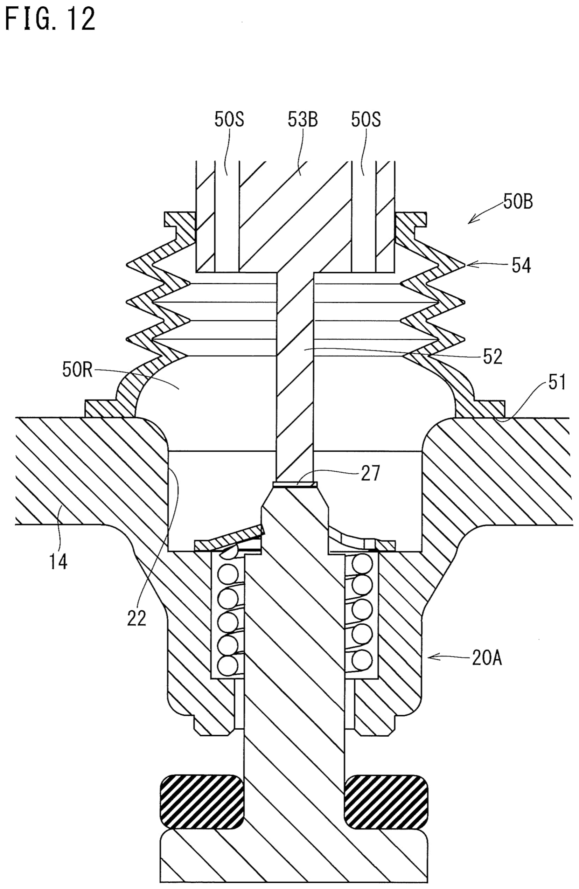

The present embodiment illustrated in FIGS. 11 and 12 is different from the first embodiment in the structure of a nozzle 50B. The nozzle 50B includes a nozzle body 53B having a structure in which the distal end side of the partition wall 53 in the nozzle 50A (see FIG. 5) of the first embodiment is removed, and a bellows-shaped extension pipe 54 fitted and fixed to the outside of a distal end portion of the nozzle body 53B. The extension pipe 54 extends to a position beyond the valve opener portion 52 in a natural state where no force is applied, and its distal end surface serves as the opening edge contact portion 51. When the nozzle 50B is connected to the injection hole 22, the nozzle 50B is lowered in a state where the valve opener portion 52 is disposed coaxially with the injection hole 22 in the check valve mechanism 20A. As a result, as illustrated in FIG. 11, the opening edge contact portion 51 comes into contact with the opening edge of the injection hole 22 on the outer surface of the plate body 14 to connect the flow path 50R in the nozzle 50B and the injection hole 22. Then, as illustrated in FIG. 12, the valve opener portion 52 comes into contact with the valve-opening operation portion 27 of the check valve mechanism 20A to change the check valve mechanism 20A from a closed state to an open state. With this configuration, entry of the outside air into the battery cell 10A can be more reliably avoided.

### [Sixth embodiment]

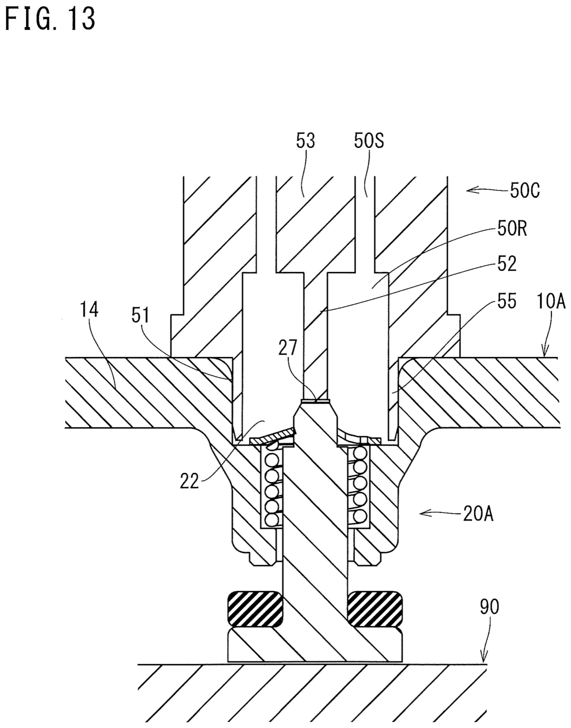

The present embodiment illustrated in FIG. 13 is different from the first embodiment in the structure of a nozzle 50C. The nozzle 50C has a structure in which a connection cylindrical portion 55 protrudes from an inner edge portion of a distal end surface of the nozzle 50A (see FIG. 5) of the first embodiment. When the nozzle 50C is disposed coaxially with the injection hole 22 and brought close to the injection hole 22, a distal end portion of the connection cylindrical portion 55 is fitted into the injection hole 22, and then the valve opener portion 52 comes into contact with the valve-opening operation portion 27 of the check valve mechanism 20A. When the fitting between the connection cylindrical portion 55 and the injection hole 22 is further deepened, the valve-opening operation portion 27 is pushed by the valve opener portion 52 of the nozzle 50C, and the check valve mechanism 20A is switched from a closed state to an open state. As a result, entry of the outside air into the battery cell 10A can be more reliably avoided. In the present embodiment, an outer surface of the connection cylindrical portion 55 functions as the opening edge contact portion 51.

### [Seventh embodiment]

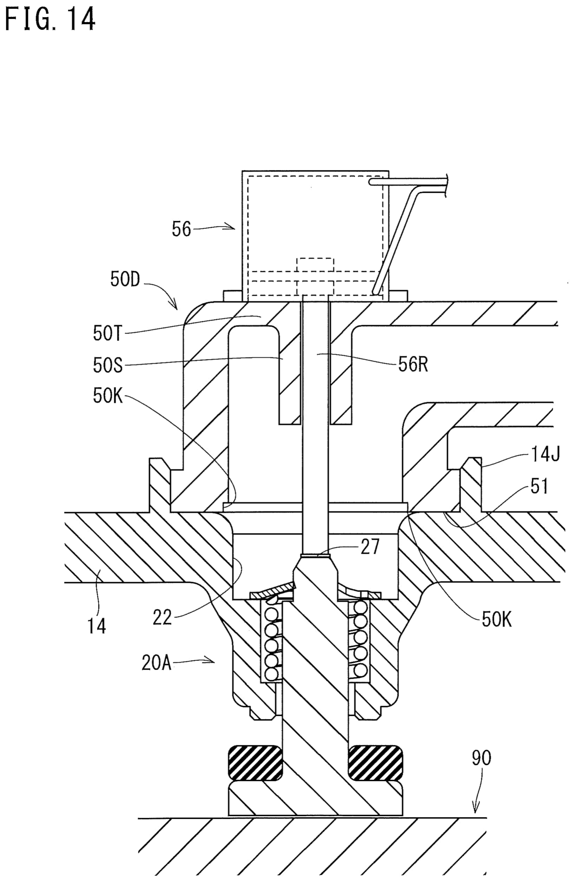

The present embodiment illustrated in FIG. 14 is different from the first embodiment in the structure of a nozzle 50D and the structure of the outer surface of the plate body 14. The nozzle 50D of the present embodiment is bent in an L shape at a distal end portion, and an air cylinder 56 is fixed to an outer surface of an opening facing wall 50T, which opposes a distal end opening 50K. A linear motion rod 56R provided in the air cylinder 56 passes through the opening facing wall 50T and extends toward the distal end opening 50K. A support protrusion 50S that linearly movably supports the linear motion rod 56R protrudes from an inner surface of the opening facing wall 50T. By alternatively supplying compressed air to the distal end side and the proximal end side of the air cylinder 56, the linear motion rod 56R moves between an advanced position protruding beyond the distal end opening 50K and a retracted position retracted from the advanced position toward the opening facing wall 50T.

An annular protrusion 14J protrudes from the outer surface of the plate body 14 to fit to the outer side of the nozzle 50D in a state where the center of the distal end opening 50K of the nozzle 50D and the center of the injection hole 22 coincide.

The nozzle 50D of the present embodiment is fitted to the annular protrusion 14J in a state where the linear motion rod 56R is disposed at the retracted position. Then, the supply of compressed air to the air cylinder 56 is switched, and the linear motion rod 56R moves from the rear end position to the advanced position, so that the valve-opening operation portion 27 is pressed by the linear motion rod 56R, and the check valve mechanism 20A is switched from a closed state to an open state. That is, in the present embodiment, the linear motion rod 56R functions as the "valve opener portion".

### [Eighth embodiment]

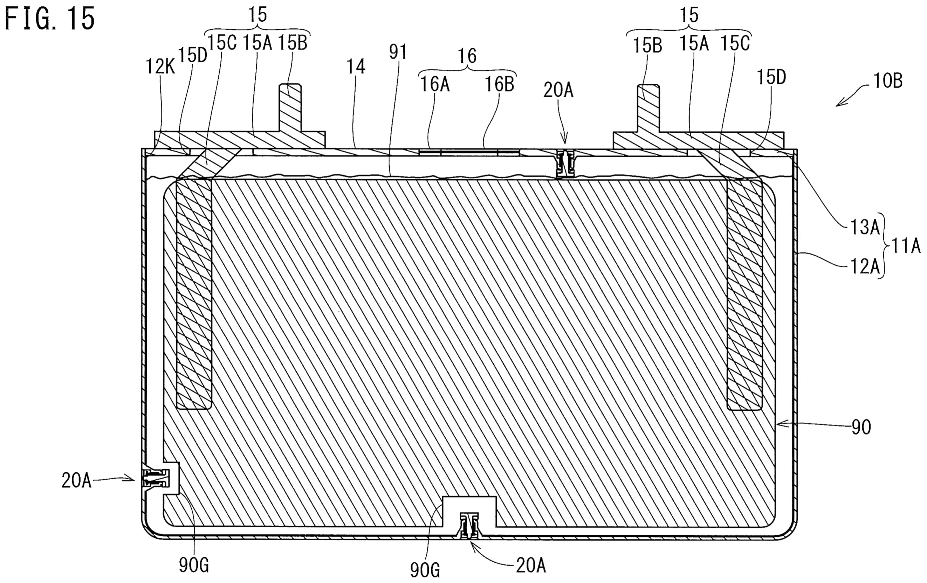

A battery cell 10B of the present embodiment illustrated in FIG. 15 includes the check valve mechanism 20A on its upper surface, its side surface, and its bottom surface. In order to prevent the check valve mechanisms 20A on the side surface and the bottom surface from interfering with the laminate 90, recesses 90G are formed in the laminate 90. According to the battery cell 10B, the electrolytic solution 91 can be injected not only from the upper surface but also from the side surface and the bottom surface of the battery cell 10B, which makes it possible to efficiently cause the electrolytic solution 91 to permeate between the positive electrode sheet 90A, the negative electrode sheet 90B, and the separator sheet 90C disposed near the side surface and the bottom surface.

Although 20A are disposed on the three surfaces of the upper surface, the side surface, and the bottom surface of the battery cell 10B of the present embodiment, the check valve mechanisms 20A may be disposed on any plurality of surfaces of the battery cell 10B, or may be disposed on any one surface.

### [Ninth embodiment]

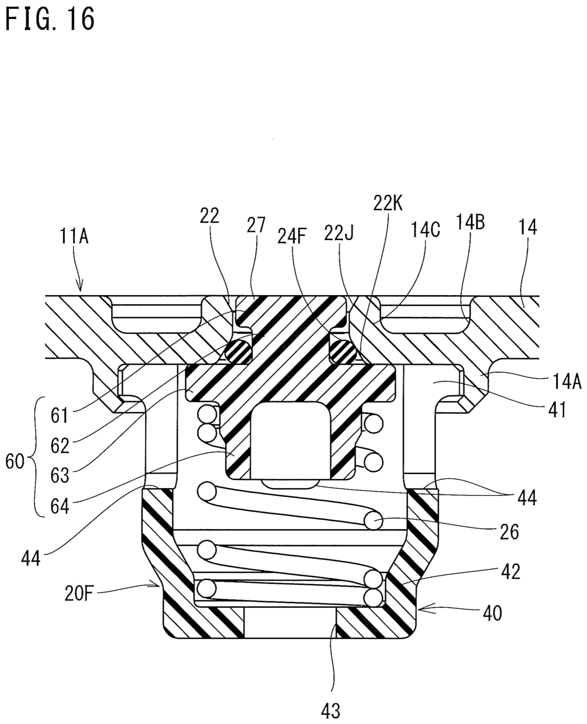

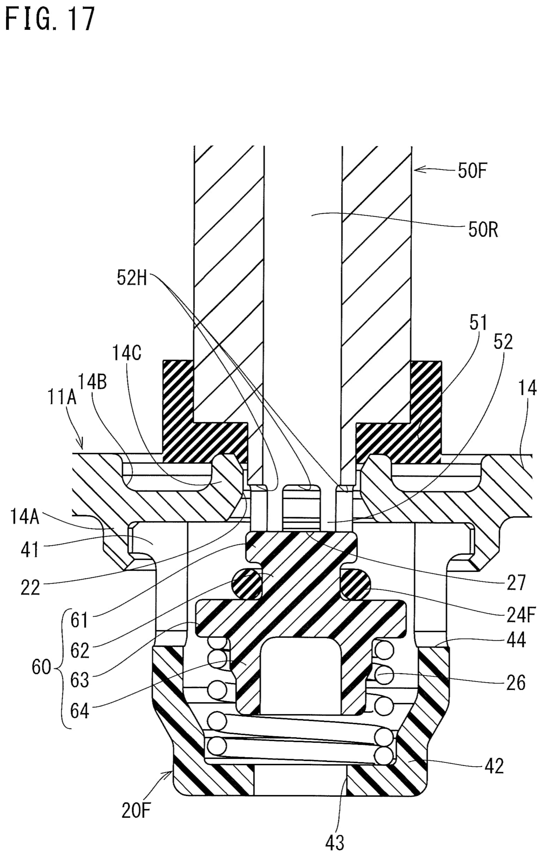

The present embodiment illustrated in FIGS. 16 and 17 is different from the first embodiment in the structures of a check valve mechanism 20F and a nozzle 50F. As illustrated in FIG. 16, the check valve mechanism 20F includes a support cylindrical portion 40 laid and fixed onto an inner surface of the plate body 14, a movable body 60 linearly movably accommodated in the support cylindrical portion 40, and a spring member 26 that biases the movable body 60 to one side in a linear motion direction.

The support cylindrical portion 40 forms, for example, a cylindrical body having an open upper end, includes a flange portion 41 protruding laterally at an upper end portion, and includes a reduced diameter portion 42, at a lower end portion, having a diameter smaller than that of the upper end portion. In the support cylindrical portion 40, a through hole 43 passing through a center portion of a bottom wall and a plurality of through holes 44 obtained by cutting out a side wall including the flange portion 41 at a plurality of positions in a circumferential direction are formed. The support cylindrical portion 40 is fitted to the inside of an annular cylindrical-body holding portion 14A protruding from the inner surface of the plate body 14, and is fixed to the plate body 14 by swaging a distal end portion of the cylindrical holding portion 14A.

The movable body 60 includes a medium-diameter portion 61, a small-diameter portion 62, a valve body 63, and a cylindrical portion 64 in this order from the upper side. The medium-diameter portion 61 and the small-diameter portion 62 have a size to be insertable into the injection hole 22 that passes through the plate body 14. An O-ring 24F as a seal member is engaged with the small-diameter portion 62. Tapered chamfered surfaces 22J and 22K are formed at an upper end portion and a lower end portion of the injection hole 22, and the chamfered surface 22K on the lower end side is inclined more largely than the chamfered surface 22J on the upper end side. A recessed portion 14B is formed on the outer surface of the plate body 14 so as to surround the injection hole 22, and an annular protrusion 14C protruding outward is formed at the opening edge of the injection hole 22. An upper end surface of the annular protrusion 14C is located at substantially the same height as the outer surface of the plate body 14.

The valve body 63 has a disk shape having an outer diameter larger than those of the medium-diameter portion 61 and the cylindrical portion 64, and the outer diameter is larger than the inner diameter of the injection hole 22 (specifically, the inner diameter of a lower end portion of the chamfered surface 22K) and smaller than the inner diameter of the upper end portion of the support cylindrical portion 40, so that the injection hole 22 can be closed. The cylindrical portion 64 has, for example, an annular shape, and has an inner diameter slightly smaller than the through hole 43 (see FIG. 17).

The spring member 26 is attached in a resiliently compressed state between the valve body 63 and the bottom wall of the support cylindrical portion 40 in the support cylindrical portion 40, and biases the movable body 60 toward a closed position. An upper end portion of the medium-diameter portion 61 serves as the valve-opening operation portion 27, and at the closed position, for example, the valve-opening operation portion 27 is disposed substantially flush with an upper end portion of the annular protrusion 14C. The reduced portion 42 of the support cylindrical body 40 is slightly larger than the outer diameter of the spring member 26, and restricts movement of the spring member 26 in a direction intersecting an axial direction.

In the present embodiment, the plate body 14 is made of metal as in the first embodiment, whereas the support cylindrical portion 40 and the movable body 60 that contact the plate body 14 are made of resin or ceramics, for example. In the check valve mechanism 20F, only the spring member 26 is made of, for example, metal (for example, stainless steel, iron alloy, or the like), and the spring member 26 does not directly contact the plate body 14. The O-ring 24F only needs to have elasticity, and is made of, for example, an elastomer (including rubber, a thermoplastic elastomer, and the like), a soft resin, or the like.

As illustrated in FIG. 17, the nozzle 50F of the present embodiment includes a valve opener portion 52 protruding in a cylindrical shape at a distal end portion, and a plurality of through holes 52H are formed at a distal end portion of the valve opener portion 52. An opening contact portion 51 having elasticity is fitted to the valve opener portion 52 of the nozzle 50F. When the nozzle 50F is disposed coaxially with the injection hole 22 and brought close to the injection hole 22, the valve opening degree 52 comes into contact with the valve-opening operation portion 27 of the check valve mechanism 20F, and the opening edge contact portion 51 comes into contact with the annular protrusion 14C to seal a space between the valve opening degree 52 and the annular protrusion 14C. When the fitting between the valve opening degree 52 and the injection hole 22 is further deepened, the valve-opening operation portion 27 is pushed by the valve opening degree 52 of the nozzle 50F, and the check valve mechanism 20F is switched from a closed state to an open state. With this configuration, entry of the outside air into the battery cell 10A can be avoided. The opening contact portion 51 is made of, for example, an elastomer (including rubber, a thermoplastic elastomer, and the like), a soft resin, or the like.

According to the check valve mechanism 20F of the present embodiment, the same operational effects as those of the first embodiment are obtained, and only the valve-opening operation portion 27 of the check valve mechanism 20F faces the outside through the injection hole 22, which makes it possible to avoid adhesion of the electrolytic solution 91 to the outside-air-side of the cell container 11A, and suppress corrosion of the cell container 11A. In addition, even if the electrolytic solution 91 adheres to the valve-opening operation portion 27 and its surrounding area, it is easy to perform removal of the adhered electrolytic solution 91. Furthermore, the annular protrusion 14C of the cell container 11A can prevent the problem in which the electrolytic solution 91 leaks out from the injection hole 22.

Moreover, in the check valve mechanism 20F of the present embodiment, since the support cylindrical portion 40 and the movable body 60 that contact the spring member 26 of stainless steel are made of resin, there is no contact between metals, and the durability of the check valve mechanism 20F is improved.

In the present embodiment, the support cylindrical portion 40 is fixed to the plate body 14 by swaging, but the fixing method is not limited thereto, and may be any method such as welding, brazing, an adhesive, or screwing. Although the support cylindrical portion 40 has the through holes 43 and 44 in the bottom wall and the side wall, the through hole may be provided in either the bottom wall or the side wall. Furthermore, although the O-ring 24F is illustrated as the seal member, the seal member is not limited to the O-ring and may be a packing.

### [Other embodiments]

A movable relief valve that is not a rupture type may be provided in the cell container 11A of the above embodiments, and air in the cell container 11A may be discharged from the relief valve when the electrolytic solution 91 is injected from the injection hole 22.

The battery cells 10A and 10B of the above embodiments may be used for an electric vehicle or a hybrid vehicle, or may be used for an emergency backup power supply, and are not limited to a particular application.

The check valve mechanisms 20A to 20C, and 20F are changed from a closed state to an open state by pressing the valve-opening operation portion 27, but may be changed from the closed state to the open state by rotating or pulling the valve-opening operation portion 27.

### <Supplementary Note>

Hereinafter, a feature group extracted from the above embodiments will be described while showing the effects and the like as necessary. It should be noted that corresponding components in the above embodiments are appropriately indicated in parentheses or the like as below, for easy understanding, but the feature group is not limited to the specific components indicated in the parentheses or the like.

### [Feature 1]

A cell container (11A) of a battery cell (10A, 10B), the cell container (11A) including: an injection hole (22) configured to allow injection of an electrolytic solution (91) into the cell container (11A); a check valve mechanism (20A to 20F) configured to allow passage of the electrolytic solution (91) into the cell container (11A) through the injection hole (22) and to prevent passage of the electrolytic solution (91) to an outside of the cell container (11A) through the injection hole (22); and a valve-opening operation portion (27) provided in the check valve mechanism (20A to 20F) and configured to bring the check valve mechanism (20A to 20F) into an open state by applying an external force other than a fluid pressure.

### [Feature 2]

The cell container (11A) according to the feature 1, wherein all components forming the check valve mechanism (20A to 20F) are made of a non-conductor.

### [Feature 3]

The cell container (11A) according to the feature 1, wherein all components forming the check valve mechanism (20A to 20F) have an electrical conductivity of 1.74 × 10⁶ S/m or less or 3%IACS or less at 20°C.

### [Feature 4]

The cell container (11A) according to the feature 1 or 3, wherein a container wall (14) of the cell container (11A) is made of metal, the check valve mechanism (20A to 20F) includes metal components, and all metals forming the metal components have a same ionization tendency as the metal forming the container wall (14).

### [Feature 5]

The cell container (11A) according to any one of the features 1, 3, and 4, wherein the check valve mechanism (20A) includes: a support cylindrical portion (21) protruding from an inner surface of the cell container (11A), and having an interior serving as the injection hole (22); a movable body (23) having a structure in which a flange portion (23B) protrudes from one end portion of a shaft portion (23A) that is loosely fitted to be linearly movable in the support cylindrical portion (21), and another end portion of the shaft portion (23A) serves as the valve-opening operation portion (27); a seal member (24) laid on the flange portion (23B) and facing a distal end surface of the support cylindrical portion (21); and a spring member (26) configured to bias the movable body (23) so as to press the seal member (24) against the distal end surface of the support cylindrical portion (21).

### [Feature 6]

The cell container (11A) according to the feature 5, wherein the movable body (23) is made of stainless steel or resin, and the spring member (26) is made of stainless steel.

### [Feature 7]

The cell container (11A) according to any one of the features 1, 3, and 4, wherein the check valve mechanism (20F) includes: a support cylindrical portion (40) having a cylindrical shape, having an opening, at one end, that is laid on and fixed to an inner surface of a container wall (14) of the cell container (11A), and having another opening at another end or on a side surface; a movable body (60) linearly movably accommodated in the support cylindrical portion (40); and a spring member (26) accommodated in the support cylindrical portion (40) and configured to bias the movable body (60) toward the container wall (14), the injection hole (22) passes through the container wall (14), the movable body (60) includes a valve body (63) capable of closing the injection hole (22) by being laid on an opening of the injection hole (22), and a portion of the movable body (60) that faces the outside through the injection hole (22) serves as the valve-opening operation portion (27).

### [Feature 8]

The cell container (11A) according to the feature 7, wherein the support cylindrical portion (40) and the movable body (60) are made of resin, and the spring member (26) is made of stainless steel.

### [Feature 9]

The cell container (11A) according to the feature 7 or 8, including an annular protrusion (14C) protruding outward from an opening edge of the injection hole (22) in the container wall (14).

### [Feature 10]

The cell container (11A) according to any one of the features 1 to 9, wherein the injection hole (22) is disposed in a side surface or a bottom surface.

### [Feature 11]

An upper plate (13A) that is fixed to a container body (12A) having an open upper surface and that forms the cell container (11A) according to any one of the features 1 to 10 together with the container body (12A), the upper plate (13A) including the injection hole (22) including the check valve mechanism (20A to 20F).

### [Feature 12]

A check valve (20Z) used for the cell container (11A) according to any one of the features 1 to 9, and attached into the injection hole (22) to form the check valve mechanism (20E), the check valve (20Z) including: a valve stem (33) fitted into the injection hole (22); a movable body (31) having a structure in which a flange portion (31B) protrudes from one end portion of a shaft portion (31A) that is linearly movably supported by the valve stem (33), and another end portion serves as the valve-opening operation portion (27); a seal member (24E) laid on the flange portion (31B) and facing one end surface of the valve stem (33); and a spring member (26) configured to bias the movable body (31) to press the seal member (24E) against the one end surface of the valve stem (33).

### [Feature 13]

A nozzle (50A to 50D, 50F) for injecting the electrolytic solution (91) into the cell container (11A) according to any one of the features 1 to 10, the nozzle (50A to 50D, 50F) including: an opening edge contact portion (51) provided around a distal end opening of the nozzle (50A to 50D, 50F) and configured to come into contact with an opening edge of the injection hole (22) in the cell container (11A); and a valve opener portion (52) configured to apply an external force to the valve-opening operation portion (27) in a state where the opening edge contact portion (51) is in contact with the opening edge of the injection hole (22), and to hold the check valve mechanism (20A to 20F) in an open state.

### [Feature 14]

A method for manufacturing the battery cell (10A, 10B) in which the battery cell (10A, 10B) is manufactured by injecting the electrolytic solution (91) into the cell container (11A) according to any one of the features 1 to 10 in a state where a plurality of electrode sheets (90A, 90B) and a plurality of separator sheets (90C) are accommodated in the cell container (11A), the method including injecting the electrolytic solution (91) into the cell container (11A) in a state where the check valve mechanism (20A to 20F) is held in an open state by an external force applied to the valve-opening operation portion (27).

### [Feature 15]

A method for manufacturing the battery cell (10A, 10B) in which the battery cell (10A, 10B) is manufactured by injecting the electrolytic solution (91) into the cell container (11A) according to any one of the features 1 to 10 in a state where a plurality of electrode sheets (90A, 90B) and a plurality of separator sheets (90C) are accommodated in the cell container (11A), the method including injecting a compressed gas into the cell container (11A) to bring an inside of the battery cell (10A, 10B) into a pressurized state after injecting the electrolytic solution (91) into the cell container (11A) in order to allow the electrolytic solution (91) to permeate between the electrode sheets (90A, 90B) and the separator sheets (90C).

### [Feature 16]

A method for manufacturing the battery cell (10A, 10B) including the cell container (11A) according to any one of the features 1 to 10, the method including: an electrolytic solution injection step of injecting the electrolytic solution (91) into the cell container (11A); an initial charging step of charging the battery cell (10A, 10B) after the electrolytic solution injection step; and a gas discharging step of applying an external force to the valve-opening operation portion (27) to bring the check valve mechanism (20A to 20F) into an open state after the initial charging step, and of discharging a gas generated in the battery cell (10A, 10B) in the initial charging step, from the cell container (11A).

### [Feature 17]

The method for manufacturing the battery cell (10A, 10B) according to the feature 16, wherein a closing member (28, 28E) is attached to the cell container (11A) to close the injection hole (22) after the gas discharging step.

### [Feature 18]

A battery cell (10A, 10B) including the cell container (11A) according to any one of the features 1 to 10, the battery cell (10A, 10B) including a closing member (28, 28E) covering the injection hole (22) from the outside, and attached to the cell container (11A) to close the injection hole (22).

Because the cell container of the feature 1 includes the check valve mechanism that allows the passage of the electrolytic solution into the cell container and prevents the passage of the electrolytic solution to an outside of the cell container through the injection hole, it is possible to prevent a problem in which the electrolytic solution leaks out from the injection hole. In addition, because the check valve mechanism is provided with the valve-opening operation portion for bringing the check valve mechanism into an open state by applying an external force other than a fluid pressure, the degree of freedom of the method for manufacturing the battery cell using the cell container of the feature 1 is increased. Specifically, by using the cell container having the structure of the feature 1, the battery cell can be manufactured by the manufacturing method of the features 14 to 16. Furthermore, when the closing member for closing the injection hole is not fixed to the battery cell, the battery cell can be easily recycled, when deteriorated, by filling the battery cell with an activator for restoring the function of the electrolytic solution. The manufacture of the battery cell also includes recycling of the battery cell.

According to the cell container of the features 2 and 3, the components forming the check valve mechanism are all made of a non-conductor or are all made of a material having a relatively low electrical conductivity, thereby preventing a problem in which the check valve mechanism functions as an electrode.

As in the feature 4, the container wall of the cell container and the metal components forming the check valve mechanism are all made of metals having the same ionization tendency, so that corrosion of the check valve mechanism and the cell container is suppressed.

Examples of the structure of the check valve mechanism include those in the features 5 and 7, but any structure may be used as long as the check valve mechanism can be brought into an open state by being pressed with a force other than the fluid pressure. For example, a movable body that is rotatably supported to open and close the injection hole, and a torsion spring that biases a valve body thereof in a closing direction may be provided, and a part of the valve body itself may serve as the valve opener portion.

In addition, as in the feature 7, only the valve-opening operation portion of the check valve mechanism faces the outside through the injection hole, which makes it possible to avoid adhesion of the electrolytic solution to the outside-air-side of the cell container and suppress corrosion of the cell container.

According to the feature 8, since the support cylindrical portion and the movable body that contact the spring member of stainless steel are made of resin, there is no contact between metals in the check valve mechanism, and the durability of the check valve mechanism is improved.

According to the cell container of the feature 9, the annular protrusion can prevent the problem in which the electrolytic solution leaks out from the injection hole.

In the cell container of the feature 10, since the injection hole including the check valve mechanism is disposed in the side surface or the bottom surface, the electrolytic solution can efficiently permeate between the separator and the electrode films disposed near the side surface or the bottom surface.

According to the feature 11, since the container body and the upper plate including the check valve mechanism of the cell container can be separately manufactured, the attachment of the check valve mechanism can be easily performed, and the production efficiency is improved.

Since the check valve of the feature 12 is attached into the injection hole of the cell container, the check valve and other portions of the cell container can be produced separately, and the production efficiency of each component is improved.

The nozzle of the feature 13 includes the opening edge contact portion configured to come into contact with the opening edge of the injection hole in the cell container, and the valve opener portion configured to press the valve-opening operation portion in a state where the opening edge contact portion is in contact with the opening edge of the injection hole to hold the check valve mechanism in an open state. Therefore, fluid resistance by the check valve mechanism at the time of injection of the electrolytic solution into the cell container is suppressed, smooth injection of the electrolytic solution is enabled, and a hunting phenomenon in which the check valve mechanism is repeatedly opened and closed is prevented.

In the method for manufacturing the battery cell of the feature 14, since the electrolytic solution is injected into the cell container in a state where the check valve mechanism is held in an open state, fluid resistance by the check valve mechanism at the time of injection of the electrolytic solution is suppressed, smooth injection of the electrolytic solution is enabled, and a hunting phenomenon in which the check valve mechanism is repeatedly opened and closed is prevented.

In the method for manufacturing the battery cell of the feature 15, after the electrolytic solution has been injected into the cell container, the compressed gas is injected into the cell container to bring the inside of the battery cell into a pressurized state, so that the permeation rate of the electrolytic solution between the electrode films and the separator is increased, and the production efficiency is improved.

Here, in a conventional method for manufacturing a battery cell, initial charging is performed after the electrolytic solution has been injected into the cell container and the injection hole has been sealed. Thus, a problem occurs in which the inside of the cell container is brought into a pressurized state before use of the cell battery due to the gas generated by the initial charging, and deformation or deterioration of the cell container easily proceeds. On the other hand, in the method for manufacturing the battery cell of the feature 16, the valve-opening operation portion is pressed to bring the check valve mechanism into an open state after the initial charging step, and the gas generated in the battery cell in the initial charging step is discharged from the cell container, so that the occurrence of the above-described problem can be avoided.

According to the features 17 and 18, since the injection hole is closed by the closing member, a problem in which water or the like enters the inside through the injection hole after the injection of the electrolytic solution is prevented.

Although specific examples of the technique included in the claims are disclosed in the present specification and the drawings, the technique described in the claims is not limited to these specific examples, and includes those obtained by variously modifying or changing the specific examples, and also includes those obtained by singly extracting part from the specific examples.

### DESCRIPTION OF THE REFERENCE NUMERALS

- 10A, 10B: Battery cell
- 11A: Cell container
- 12A: Container body
- 13A: Upper plate
- 14: Plate body
- 20A to 20F: Check valve mechanism
- 20Z: Check valve
- 21, 21B, 21C, 40: Support cylindrical portion
- 22: Injection hole
- 23, 23C, 30, 31, 60: Movable body
- 23A, 31A: Shaft portion
- 23B, 31B: Flange portion
- 24, 24C to 24E: Packing (seal member)
- 24F: O-ring (seal member)
- 26, 26D, 32: Spring member
- 27: Valve-opening operation portion
- 28, 28E: Closing member
- 33: Valve stem
- 50A to 50D, 50F: Nozzle
- 51: Opening edge contact portion
- 52: Valve opener portion
- 56R: Linear motion rod (valve opener portion)
- 63: Valve body
- 90A: Positive electrode sheet (electrode sheet)
- 90B: Negative electrode sheet (electrode sheet)
- 90C: Separator sheet
- 91: Electrolytic solution

## Claims

1. A cell container of a battery cell, the cell container comprising:
an injection hole configured to allow injection of an electrolytic solution into the cell container;
a check valve mechanism configured to allow passage of the electrolytic solution into the cell container through the injection hole and to prevent passage of the electrolytic solution to an outside of the cell container through the injection hole; and
a valve-opening operation portion provided in the check valve mechanism and configured to bring the check valve mechanism into an open state by applying an external force other than a fluid pressure.

2. The cell container according to claim 1, wherein all components forming the check valve mechanism are made of a non-conductor.

3. The cell container according to claim 1, wherein all components forming the check valve mechanism have an electrical conductivity of 1.74 × 10⁶ S/m or less or 3%IACS or less at 20°C.

4. The cell container according to claim 1 or 3, wherein
a container wall of the cell container is made of metal,
the check valve mechanism includes metal components, and all metals forming the metal components have a same ionization tendency as the metal forming the container wall.

5. The cell container according to any one of claims 1, 3, and 4, wherein
the check valve mechanism includes:
a support cylindrical portion protruding from an inner surface of the cell container, and having an interior serving as the injection hole;
a movable body having a structure in which a flange portion protrudes from one end portion of a shaft portion that is loosely fitted to be linearly movable in the support cylindrical portion, and another end portion of the shaft portion serves as the valve-opening operation portion;
a seal member laid on the flange portion and facing a distal end surface of the support cylindrical portion; and
a spring member configured to bias the movable body so as to press the seal member against the distal end surface of the support cylindrical portion.

6. The cell container according to claim 5, wherein
the movable body is made of stainless steel or resin, and
the spring member is made of stainless steel.

7. The cell container according to any one of claims 1, 3, and 4, wherein
the check valve mechanism includes:
a support cylindrical portion having a cylindrical shape, having an opening, at one end, that is laid on and fixed to an inner surface of a container wall of the cell container, and having another opening at another end or on a side surface;
a movable body linearly movably accommodated in the support cylindrical portion; and
a spring member accommodated in the support cylindrical portion and configured to bias the movable body toward the container wall,
the injection hole passes through the container wall,
the movable body includes a valve body capable of closing the injection hole by being laid on an opening of the injection hole, and
a portion of the movable body that faces the outside through the injection hole serves as the valve-opening operation portion.

8. The cell container according to claim 7, wherein
the support cylindrical portion and the movable body are made of resin, and
the spring member is made of stainless steel.

9. The cell container according to claim 7 or 8, comprising an annular protrusion protruding outward from an opening edge of the injection hole in the container wall.

10. The cell container according to any one of claims 1 to 9, wherein the injection hole is disposed in a side surface or a bottom surface.

11. An upper plate that is fixed to a container body having an open upper surface and that forms the cell container according to any one of claims 1 to 10 together with the container body, the upper plate comprising
the injection hole including the check valve mechanism.

12. A check valve used for the cell container according to any one of claims 1 to 9, and attached into the injection hole to form the check valve mechanism, the check valve comprising:
a valve stem fitted into the injection hole;
a movable body having a structure in which a flange portion protrudes from one end portion of a shaft portion that is linearly movably supported by the valve stem, and another end portion serves as the valve-opening operation portion;
a seal member laid on the flange portion and facing one end surface of the valve stem; and
a spring member configured to bias the movable body to press the seal member against the one end surface of the valve stem.

13. A nozzle for injecting the electrolytic solution into the cell container according to any one of claims 1 to 10, the nozzle comprising:
an opening edge contact portion provided around a distal end opening of the nozzle and configured to come into contact with an opening edge of the injection hole in the cell container; and
a valve opener portion configured to apply an external force to the valve-opening operation portion in a state where the opening edge contact portion is in contact with the opening edge of the injection hole to hold the check valve mechanism in an open state.

14. A method for manufacturing the battery cell in which the battery cell is manufactured by injecting the electrolytic solution into the cell container according to any one of claims 1 to 10 in a state where a plurality of electrode sheets and a plurality of separator sheets are accommodated in the cell container, the method comprising
injecting the electrolytic solution into the cell container in a state where the check valve mechanism is held in an open state by an external force applied to the valve-opening operation portion.

15. A method for manufacturing the battery cell in which the battery cell is manufactured by injecting the electrolytic solution into the cell container according to any one of claims 1 to 10 in a state where a plurality of electrode sheets and a plurality of separator sheets are accommodated in the cell container, the method comprising
injecting a compressed gas into the cell container to bring an inside of the battery cell into a pressurized state after injecting the electrolytic solution into the cell container in order to allow the electrolytic solution to permeate between the electrode sheets and the separator sheets.

16. A method for manufacturing the battery cell including the cell container according to any one of claims 1 to 10, the method comprising:
an electrolytic solution injection step of injecting the electrolytic solution into the cell container;
an initial charging step of charging the battery cell after the electrolytic solution injection step; and
a gas discharging step of applying an external force to the valve-opening operation portion to bring the check valve mechanism into an open state after the initial charging step, and of discharging a gas generated in the battery cell in the initial charging step, from the cell container.

17. The method for manufacturing the battery cell according to claim 16, wherein a closing member is attached to the cell container to close the injection hole after the gas discharging step.

18. A battery cell comprising the cell container according to any one of claims 1 to 10, the battery cell comprising
a closing member covering the injection hole from the outside, and attached to the cell container to close the injection hole.
